# EUROPÄISCHE PATENTSCHRIFT

(11) **EP 0 542 667 B1**
(45) Veröffentlichungstag und Bekanntmachung des Hinweises auf die Patenterteilung: **17.05.1995**
(21) Anmeldenummer: 92810564.2
(22) Anmeldetag: 23.07.1992
(51) Int. Cl.: B25F 5/00, H02K 23/66, G01P 1/02, G01P 3/487, H02K 7/20

(54) **Drehzahlregeleinrichtung für ein handgehaltenes Elektrowerkzeug und Verfahren zu deren Herstellung**
Speed regulating device for a hand-held machine tool and its method of manufacture
Dispositif de régulation de vitesse pour une machine-outil à main et sa méthode de fabrication

(30) Priorität: 14.11.1991 DE 4137385
(43) Veröffentlichungstag der Anmeldung: 19.05.1993
(73) Patentinhaber: HILTI Aktiengesellschaft, 9494 Schaan (LI)
(72) Erfinder: Burger, Helmut, W-8034 Germering (DE); Millauer, Wolfgang, W-8000 München 60 (DE)
(74) Vertreter: Wildi, Roland

(56) Entgegenhaltungen:
- EP-A- 0 229 399
- DE-A- 2 752 208
- DE-A- 4 019 787
- FR-A- 2 159 890

## Beschreibung

Die Erfindung betrifft eine Drehzahlregeleinrichtung für ein handgehaltenes Elektrowerkzeug, die als separate blockartige Baugruppe in einen Einbauraum im Verbindungsbereich des Handgriffs mit dem Antriebsgehäuse des Elektrowerkzeugs eingesetzt ist und einen zugeordneten Drehzahlaufnehmer aufweist, der die Drehzahl eines im Antriebsgehäuse eingebauten Elektromotors erfaßt. Die Erfindung bezieht sich außerdem auf ein Verfahren zur Herstellung der elektronischen, vergossenen Baugruppe der genannten Drehzahlregeleinrichtung für handgehaltene Elektrowerkzeuge unterschiedlichen Typs.

Für Elektrowerkzeuge der genannten Gattung, wofür Bohrhämmer und Bohrmaschinen, aber auch handgehaltene Schleif- und Schneidgeräte Beispiele sein mögen, ist es vorteilhaft und bekannt, eine elektronische Drehzahlregeleinrichtung für den Antriebsmotor vorzusehen, die als Einbaugruppe in einen Einbauraum zwischen dem Handgriff und dem Motorgehäuse bzw. dem Antriebsgehäuse eingesetzt wird. Dieser im Zwischenbereich zwischen Handgriff und Antriebsaggregat liegende Einbauraum ist vorteilhaft, weil er bezüglich der erforderlichen elektrischen Verbindungen auf dem kürzesten Weg zwischen dem Handgriff, an dem üblicherweise die elektrische Energie über ein Kabel eingespeist und geschaltet wird, und dem Antriebsmotor liegt, in dem die elektrische Energie verbraucht wird. Darüber hinaus bietet die räumliche Nähe zum Motor die Möglichkeit, den für die Drehzahlregelung erforderlichen Drehzahlaufnehmer (Tachogenerator) einerseits unmittelbar an die meist als separate blockartige, vergossene elektronische Baugruppe ausgeführte Drehzahlregelschaltung anzubauen mit dem Vorteil kurzer und wenig störanfälliger Verbindungen. Andererseits kann bei der gewählten Einbauart der Drehzahlaufnehmer über eine Gehäuseöffnung direkt in den Bereich des Antriebsmotors hineinragen, um damit möglichst nahe an ein rotierendes Teil heranzukommen, dessen Drehzahl erfaßt werden muß. Dadurch lassen sich fast alle möglichen Tachoprinzipien realisieren, etwa die Kombination eines rotierenden Magnetrings, dessen Magnetfeldveränderungen über Induktionsspulen erfaßt werden, das Prinzip Magnetring mit Hallsensor, aber auch Lichtschrankensysteme, wie sie etwa als sogenannte Gabellichtschranke mit Lochscheibe bekannt sind.

Probleme mit bekannten Drehzahlregeleinrichtungen der genannten Art ergeben sich jedoch daraus, daß für unterschiedliche, handgehaltene Elektrowerkzeuge einerseits, aber auch für unterschiedliche Baugrößen gleichartiger Elektrowerkzeuge andererseits, eine jeweils individuell hergestellte und angepaßte Drehzahlregeleinrichtung als blockartige Baugruppe hergestellt und auf Lager bereitgehalten werden muß.

Der Erfindung liegt damit die Aufgabe zugrunde, eine Drehzahlregelbaugruppe für Elektrowerkzeuge der genannten Gattung so zu verbessern, daß sie in möglichst identischer Bauform in mehreren ähnlichen Gerätetypen verwendet sowie vorteihaft hergestellt werden kann.

Um dieses technische Problem zu lösen, macht die Erfindung von der Erkenntnis Gebrauch, daß die eigentliche Drehzahlregeleinrichtung für eine Mehrzahl von ähnlichen Gerätetypen hinsichtlich der elektronischen Schaltung, aber auch als vergossene Baugruppe, vollkommen identisch sein kann, sofern der jeweils einzusetzende Drehzahlaufnehmer individuell an die Baugröße und Bauform des jeweiligen Elektrogeräts sowie hinsichtlich seiner Positionierung am oder im Gerät angepaßt wird.

Die Erfindung ist bei einer Drehzahlregeleinrichtung der eingangs genannten Gattung erfindungsgemäß dadurch gekennzeichnet, daß der Drehzahlaufnehmer in ein separates Gehäuseteil eingebaut ist, das durch eine paßgenaue, zentrierende Öffnung in das Antriebs- oder Motorgehäuse des Elektrowerkzeugs hineinragt und über ein flexibles Kabel mit der Baugruppe der Drehzahlregeleinrichtung verbunden ist.

Vorteilhafterweise wird das separate Gehäuseteil des Drehzahlaufnehmers in einer Schiebeführung an der blockartigen Baugruppe der Drehzahlregeleinrichtung gehalten.

Um eine vorteilhafte und wirtschaftliche Herstellung der elektronischen, vergossenen Baugruppe einer Drehzahlregeleinrichtung mit Drehzahlaufnehmer für handgehaltene Elektrowerkzeuge unterschiedlichen Typs zu ermöglichen, sieht die Erfindung ein Verfahren vor, bei dem
- ein als Schutzumhüllung für die elektronischen Komponenten der Drehzahlregeleinrichtung bestimmter blockartiger Kunststoffbecher in einem Spritzverfahren hergestellt wird, an den über wenigstens einen bei der späteren Montage durchtrennbaren Verbindungssteg ein zweiter Kunststoffbecher angesetzt wird, der bestimmt ist als Schutzumhüllung für den Drehzahlaufnehmer und einstückig im gleichen Spritzvorgang hergestellt wird,
- sodann die Bestückung der beiden Kunststoffbecher mit den Komponenten der Drehzahlregeleinrichtung bzw. mit den Komponenten des Drehzahlaufnehmers erfolgt, wobei der Drehzahlaufnehmer mit der Drehzahlregeleinrichtung über ein flexibles Kabel verbunden wird, und
- anschließend beide Kunststoffbecher vergossen werden.

Beim positionsrichtigen Einbau in das Elektrowerkzeug wird dann der mit dem Drehzahlaufnehmer bestückte zweite Kunststoffbecher durch Durchtrennen des Verbindungsstegs oder der Verbindungsstege gelöst und wird sodann in eine paßgenaue, zentrierende Öffnung im Antriebsgehäuse des Elektrowerkzeugs eingesetzt, derart daß er berührungsfrei auf ein rotierendes Teil des Antriebsmotors, beispielsweise auf einen Magnetring, ausgerichtet ist.

Die Erfindung und vorteilhafte Einzelheiten werden nachfolgend unter Bezug auf die Zeichnung in beispielsweiser Ausführungsform näher erläutert. Es zeigen:
- Fig. 1: in einer Prinzip-Teildarstellung einen Bohrhammer mit einer erfindungsgemäßen Drehzahlregelbaugruppe;
- Fig. 2: die Draufsicht auf eine erfindungsgemäße Drehzahlregelbaugruppe;
- Fig. 3: eine vergrößerte Einzeldarstellung der erfindungsgemäßen Drehzahlregelbaugruppe mit gleitend verschiebbarem Drehzahlaufnehmer; und
- Fig. 4: eine der Fig. 3 entsprechende Darstellung einer Drehzahlregelbaugruppe mit veränderbarer Einbautiefe für den Drehzahlaufnehmer.

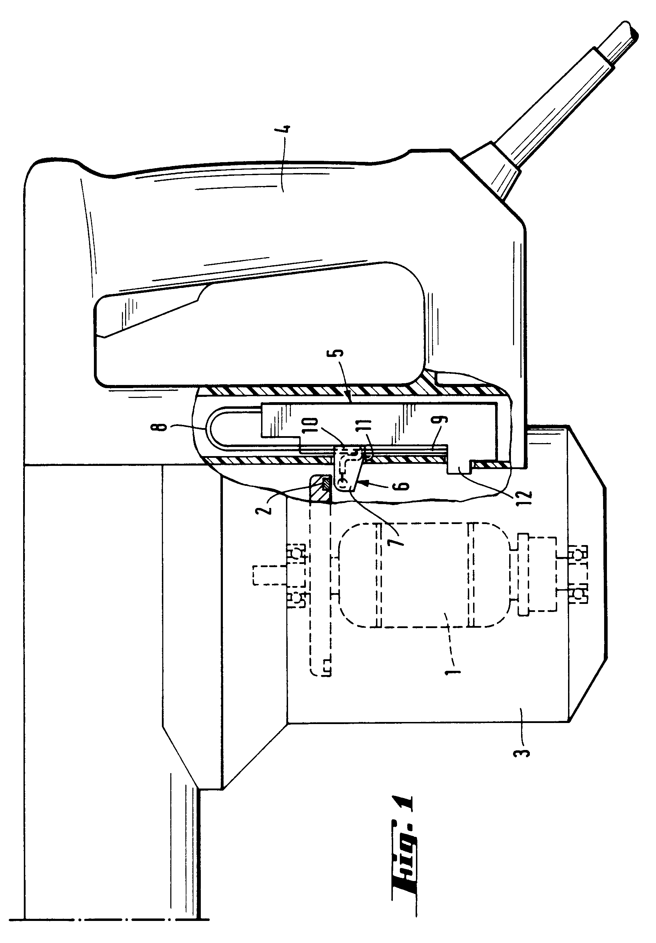

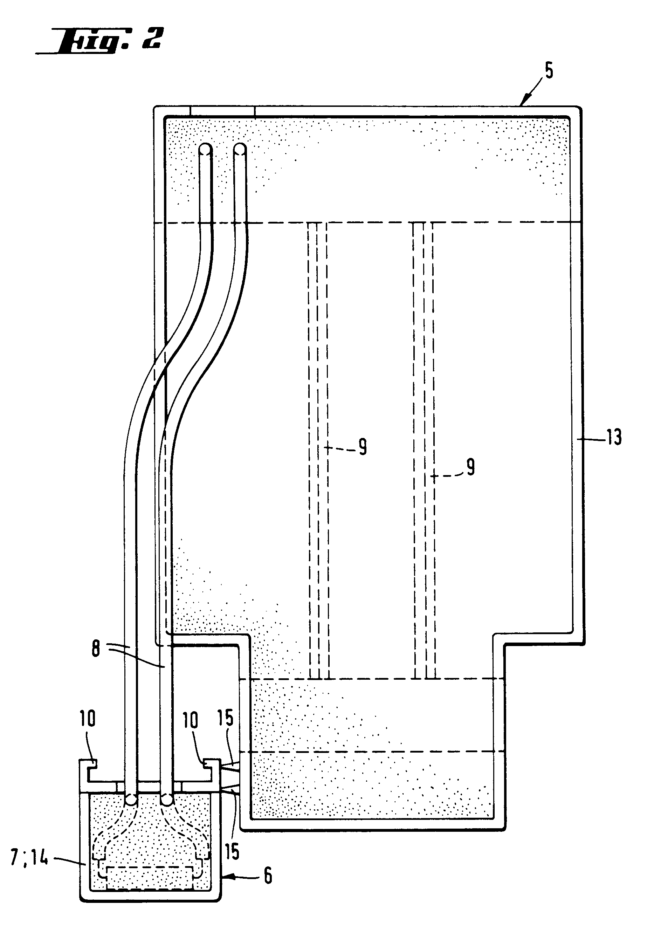

Die Prinzip-Teildarstellung der Fig. 1 zeigt einen Bohrhammer mit einem Antriebsmotor 1, dessen Rotorachse entweder direkt oder über Zwischenglieder mit einem rotierenden Magnetring 2 verbunden ist. Das sich bei Rotation ändernde Feld des Magnetrings 2 wird durch einen Tachogenerator oder Drehzahlaufnehmer 6 erfaßt, der in bekannte Weise in einem auf dem Magnetring 2 ausgerichteten Bereich eine Induktionsspulenanordnung oder einen Hall-Generator enthalten kann. Der Drehzahlaufnehmer 6 ist in einem Gehäuse 7 gehalten, das durch eine Öffnung 11 in den Innenraum des Motorgehäuses 3 hineinragt. Das Gehäuse 7 mit dem darin vergossen eingesetzten Drehzahlaufnehmer 6 weist in einem außerhalb des Gehäuses 3 liegenden Bereich Gleitführungselemente 10 auf (siehe auch Fig. 2), die mit Gleitschienen 9 am blockartigen Gehäuse einer als vergossene elektronische Baugruppe ausgeführten Drehzahlregeleinrichtung zusammenwirken. Auf diese Weise läßt sich der Drehzahlaufnehmer 6 samt seinem Gehäuse 7 in Vertikalrichtung (in Fig. 1) verschieben und so auf unterschiedliche Öffnungen bei unterschiedlich großen Antrieben bzw. Antriebsgehäusen 3 anpassen. Über die genannte Öffnung im Antriebsgehäuse 3 wird der Drehzahlaufnehmer 6 paßgenau und positionsrichtig in Ausrichtung auf den Magnetring 2 fixiert. Der Drehzahlaufnehmer 6 ist über ein flexibles Kabel 8 mit der vergossenen Baugruppe der Drehzahlregeleinrichtung 5 verbunden, die ihrerseits in einen ausgesparten Raum im Handgriff 4 des Elektrowerkzeugs paßgenau eingesetzt ist und zusätzlich über einen Haltezapfen oder -stutzen 12 im Gerätegehäuse 3 fixiert ist.

Die Fig. 2 dient zur Verdeutlichung des Herstellverfahrens für eine Drehzahlregelbaugruppe erfindungsgemäßer Art. Die Darstellung zeigt einen blockartigen Kunststoffbecher 13 in Draufsicht, der zur Aufnahme der elektronischen Baugruppen und Komponenten der Drehzahlregeleinrichtung 5 dient. Der Kunststoffbecher 13 ist über einen oder mehrere durchtrennbare Steg(e) 15 mit einem zweiten kleineren Kunststoffbecher 14, auch als Tochterbecher bezeichnet, einstückig verbunden. An dem Tochterbecher 14 sind die Gleitführungen 10 in der dargestellten Weise außenseitig angeformt. Der größere Kunststoffbecher 13 und der Tochterbecher 14 werden in einem einzigen Verfahrensschritt als einheitliches Kunststoffspritzformteil hergestellt. Solange die beiden Kunststoffbecher 13 und 14 noch über den oder die Verbindungssteg(e) 15 verbunden sind, erfolgt die Bestückung und der Einbau der elektronischen Komponenten der Drehzahlregeleinrichtung in den Kunststoffbecher 13 und des Drehzahlaufnehmers in den Tochterbecher 14, der über das flexible Kabel 8 elektrisch mit der Drehzahlregeleinrichtung 5 verbunden wird. Anschliebend erfolgt das Vergießen der elektronischen Baugruppen in bekannter Weise, derart, daß nach Fertigstellung die Drehzahlregeleinrichtung und der Drehzahlaufnehmer immer noch einstückig verbunden sind, so daß eine leichte Handhabbarkeit und Lagerhaltung ermöglicht ist.

Zum Einbau in das Elektrowerkzeug werden zunächst der oder die Steg(e) 15 durchtrennt, so daß der Drehzahlaufnehmer 6 mit seinem im wesentlichen durch den Tochterbecher 14 gebildeten Gehäuse 7 innerhalb des durch die Länge des Kabels 8 vorgegebenen Bereichs unabhängig von der Baugruppe des Drehzahlaufnehmers wird, so daß eine einfache Anpassung auf unterschiedliche Baugrößen des Antriebsaggregats des Elektrowerkzeugs möglich wird. Über die in den Führungsschienen 9 gehaltenen Führungen 10 läßt sich der Drehzahlaufnehmer 6 auf einfache Weise an unterschiedliche Montagepositionen anpassen.

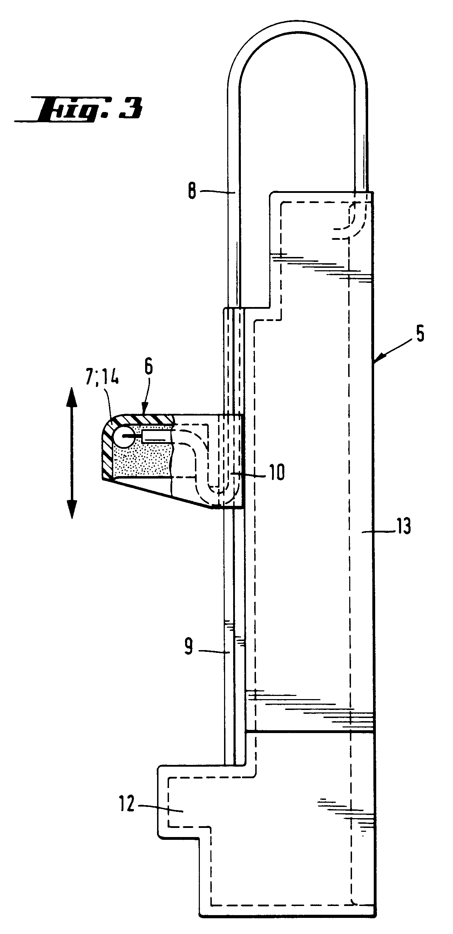

Die Fig. 3 zeigt die Baugruppenkombination von Drehzahlregeleinrichtung 5 und Drehzahlaufnehmer 6 in genaueren Details, wobei vor allem die Führungsschienen 9 besser erkennbar sind als bei der Darstellung nach Fig. 1.

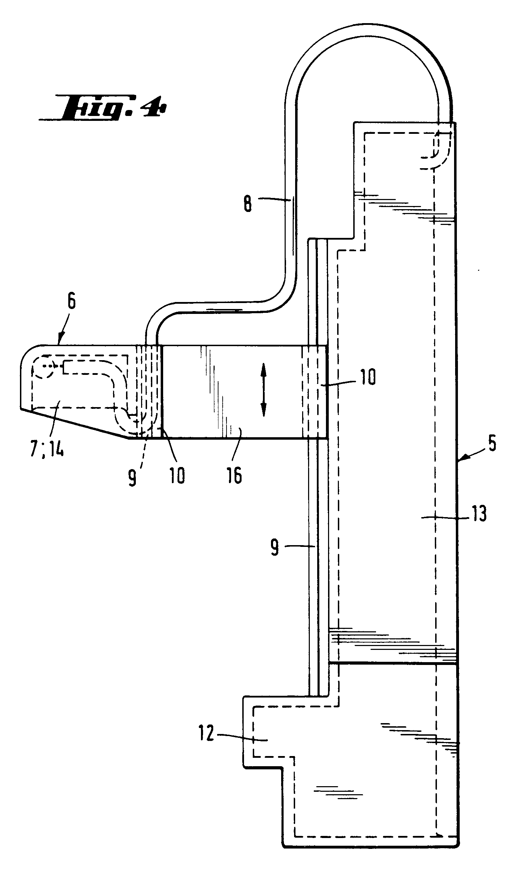

Die Fig. 4 zeigt noch eine vorteilhafte Besonderheit. Hier ist das Gehäuse 7 des Drehzahlaufnehmers 6 über ein auswechselbares Adapterstück 16 an der Führung 9, 10 befestigt. Auf diese Weise kann die Einbautiefe der Drehzahlregeleinrichtung 6 an unterschiedliche Gegebenheiten des Antriebsaggregats des Elektrowerkzeugs angepaßt werden. Das Adapterteil 16 wird in der Regel ebenfalls als preisgünstig hergestelltes Kunststoffteil in verschiedenen Abemessungen hergestellt werden.

Mit der Erfindung läßt sich also die elektronische Drehzahlregelbaugruppe für handgehaltene elektrische Arbeitsgeräte mit in einem großen Bereich variabel veränderbarem Drehzahlaufnehmer-oder Tachosystem betreiben, ohne daß die gesamte Baugruppe verändert werden muß und dadurch ihren Gleichteilcharakter verlieren würde.

## Patentansprüche

1. Drehzahlregeleinrichtung für ein handgehaltenes Elektrowerkzeug, die als separate blockartige Baugruppe (5) in einen Einbauraum im Verbindungsbereich des Handgriffs (4) mit dem Antriebsgehäuse (3) des Elektrowerkzeugs eingesetzt ist und einen zugeordneten Drehzahlaufnehmer (6) aufweist, der die Drehzahl eines im Antriebsgehäuse (3) eingebauten Elektromotors (1) erfaßt, **dadurch gekennzeichnet,** daß der Drehzahlaufnehmer (6) in ein separates Gehäuseteil (7, 14) eingebaut ist, das durch eine paßgenaue, zentrierende Öffnung in das Motorgehäuse (3) hineinragt und über ein flexibles Kabel (8) mit der Baugruppe (5) der Drehzahlregeleinrichtung verbunden ist.

2. Drehzahlregeleinrichtung nach Anspruch 1, **dadurch gekennzeichnet,** daß das separate Gehäuseteil (7, 14) des Drehzahlaufnehmers (6) in einer Schiebeführung (9, 10) der blockartigen Baugruppe (5) der Drehzahlregeleinrichtung gehalten ist.

3. Drehzahlregeleinrichtung nach Anspruch 1 oder 2, **dadurch gekennzeichnet,** daß die Einbautiefe für den Drehzahlaufnehmer über ein Adapterstück (16) zwischen der blockartigen Baugruppe (5) und dem separaten Gehäuseteil (7, 14) definiert veränderbar ist.

4. Drehzahlregeleinrichtung nach einem der vorstehenden Ansprüche, **dadurch gekennzeichnet,** daß das Elektrowerkzeug eine Bohrmaschine oder ein Bohrhammer ist.

5. Verfahren zur Herstellung der elektronischen, vergossenen Baugruppe einer Drehzahlregeleinrichtung nach dem Oberbegriff des Anspruchs 1 mit Drehzahlaufnehmer für handgehaltene Elektrowerkzeuge unterschiedlichen Typs, **dadurch gekennzeichnet,** daß
- ein als Schutzumhüllung für die elektronischen Komponenten der Drehzahlregeleinrichtung (5) bestimmter blockartiger Kunststoffbecher (13) in einem Spritzverfahren hergestellt wird, an den über wenigstens einen bei der späteren Montage durchtrennbaren Verbindungssteg (15) ein zweiter Kunststoffbecher (14), bestimmt als Schutzumhüllung für den Drehzahlaufnehmer (6), einstückig und im gleichen Spritzvorgang hergestellt, angesetzt wird,
- sodann die Bestückung der beiden Kunststoffbecher (13, 14) mit den Komponenten der Drehzahlregeleinrichtung (5) bzw. mit den Komponenten des Drehzahlaufnehmers (6) erfolgt, wobei der Drehzahlaufnehmer mit der Drehzahlregeleinrichtung über ein flexibles Kabel (8) verbunden wird, und daß
- anschließend beide Kunststoffbecher (13, 14) vergossen werden.

## Claims

1. Revolution regulating device for a hand held electric tool, which is inserted as a separate block like assembly unit (5) in a mounting chamber in the region of the hand grip (4) where it communicates with the drive housing (3) of the electric tool and has an associated revolution sensor (6) to detect the revolutions of an electric motor (1) mounted in the drive housing (3), characterised in that the revolution sensor (6) is mounted in a separate housing part (7, 14) which projects into the motor housing (3) through an accurately fitting centring aperture and is connected by a flexible cable (8) with the assembly unit (5) of the revolution regulating device.

2. Revolution regulating device according to claim 1, characterised in that the separate housing part (7, 14) of the revolution sensor (6) is held in a displacement guide (9, 10) of the block like assembly unit (5) of the revolution regulating device.

3. Revolution regulating device according to claim 1 or 2, characterised in that the insertion depth of the revolution sensor can be varied in defined manner by means of an adaptor element (16) between the block like assembly unit (5) and the separate housing part (7, 14).

4. Revolution regulating device according to one of the preceding claims, characterised in that the electric tool is a drilling machine or a hammer drill.

5. Method for the production of the electronic encapsulated assembly unit of a revolution regulating device according to the pre-characterising part of claim 1 with a revolution sensor for hand held electric tools of different design, characterised in that
- a block like plastic can (13) intended as a protective cover for the electronic components of the revolution regulating device (5) is produced by an injection method and has a second plastic can (14) appended to it via at least one connecting web (15) which can be severed upon subsequent assembly, the second plastic can (14) being intended as a protective cover for the revolution sensor (6) and being produced monolithically and in the same injection process,
- after that, the two plastic cans (13, 14) are provided with the components of the revolution regulating device (5) and the components of the revolution sensor (6) respectively, the revolution sensor being connected with the revolution regulating device by a flexible cable (8), and that,
- next, the two plastic cans (13, 14) are encapsulated.

## Revendications

1. Dispositif de régulation de vitesse pour un outil électrique à main qui est monté, sous la forme d'un bloc séparé (5), dans un logement situé dans la zone de raccordement de la poignée (4) avec le carter (3) du mécanisme d'entraînement de l'outil électrique et est muni d'un capteur de vitesse (6) qui détermine la vitesse de rotation d'un moteur électrique (1) monté dans le carter (3) du mécanisme d'entraînement, **caractérisé en ce** que le capteur de vitesse (6) est monté dans un élément de carter (7, 14) séparé qui pénètre dans le carter (3) du moteur par une ouverture de centrage ajustée, et est couplé avec le groupe (5) du dispositif de régulation de vitesse par l'intermédiaire d'un câble flexible (8).

2. Dispositif de régulation de vitesse selon la revendication 1, caractérisé en ce que l'élément de carter (7, 14) séparé du capteur de vitesse (6) est maintenu dans un guidage coulissant (9, 10) du bloc (5) du dispositif de régulation de vitesse.

3. Dispositif de régulation de vitesse selon l'une des revendications 1 ou 2, caractérisé en ce que la profondeur d'encastrement pour le capteur de vitesse peut être modifiée de manière définie par l'intermédiaire d'un adaptateur (16) placé entre le bloc (5) et l'élément de carter (7, 14) séparé.

4. Dispositif de régulation de vitesse selon l'une des revendications précédentes, caractérisé en ce que l'outil électrique est une perceuse ou un marteau perforateur.

5. Procédé de fabrication du groupe électronique scellé d'un dispositif de régulation de vitesse selon le préambule de la revendication 1, avec un capteur de vitesse pour des outils électriques de types différents, **caractérisé en ce**
qu'à un boîtier en matière plastique (13) en forme de bloc servant d'enveloppe de protection pour les composants électroniques du dispositif de régulation de vitesse (5) et réalisé par un procédé de moulage par injection, un second boîtier en matière plastique (14) servant d'enveloppe de protection pour le capteur de vitesse (6) est rattaché, en une seule pièce et au cours du même processus de moulage par injection, par l'intermédiaire d'au moins une barrette de raccordement sectionnable (15) lors du montage ultérieur,
qu'ensuite, les deux boîtiers en matière plastique (13, 14) sont équipés des composants du dispositif de réglage de vitesse (5) et respectivement des composants du capteur de vitesse (6), ledit capteur de vitesse étant relié au dispositif de régulation de vitesse par l'intermédiaire d'un câble flexible (8), et
que les deux boîtiers en matière plastique (13, 14) sont scellés.
